# FASCICULE DE BREVET EUROPEEN

(11) **EP 3 912 853 B1**
(45) Date de publication et mention de la délivrance du brevet: **11.01.2023**
(21) Numéro de dépôt: 21173329.0
(22) Date de dépôt: 11.05.2021
(51) Int. Cl.: B60N 2/56, B60N 2/64, B60N 2/70

(54) **ASSISE DE SIÈGE VENTILÉE COMPORTANT UNE NAPPE DE SUSPENSION SOUS FORME D'UN FILM**
BELÜFTETE SITZFLÄCHE EINES SITZES MIT EINER AUFHÄNGUNGSAUFLAGE IN FORM EINER FOLIE
SITTING AREA OF VENTILATED SEAT COMPRISING A SUSPENSION SHEET IN THE FORM OF A FILM

(30) Priorité: 19.05.2020 FR 2005072
(43) Date de publication de la demande: 24.11.2021
(73) Titulaire: Renault s.a.s, 92100 Boulogne Billancourt (FR)
(72) Inventeur: SOUVILLE, Philippe, 78180 Montigny le Bretonneux (FR); BARRIERE, Hervé, 28410 Saint Lubin de la Haye (FR); REMACLE, HENRI, 93330 Neuilly sur Marne (FR)
(74) Mandataire: Renault Group

(56) Documents cités:
- WO-A1-2013/088669
- WO-A1-2015/178712
- DE-A1-102010 005 728

## Description

La présente invention concerne une assise de siège ventilée comportant une nappe de suspension sous forme d'un film.

Afin de bien comprendre le positionnement des différentes éléments impliqués dans une assise d'un siège selon l'invention, la description est réalisée en supposant que l'assise est placée dans un véhicule dans une position fonctionnelle, et en faisant donc référence à un repère orthonormé direct XYZ lié au véhicule et dans lequel X est un axe longitudinal avant-arrière du véhicule orienté vers l'arrière, Y est un axe transversal orienté vers la droite du véhicule et Z est un axe vertical dirigé vers le haut.

Certaines assises de sièges de véhicule comprennent une structure incluant une traverse avant et une traverse arrière s'étendant parallèlement à un axe transversal Y du véhicule, et entre lesquelles est tendue un film en plastique faisant office de nappe de suspension. Ce film comprend un profil d'accroche avant se fixant à la traverse avant et un profil d'accroche arrière se fixant à la traverse arrière, ledit film étant mis sous tension mécanique et s'étendant dans un plan horizontal lorsque le véhicule est placé sur un sol horizontal. DE 10 2010 005728 A1 divulgue une telle assise de siège.

D'autres assises sont dotées d'un circuit de ventilation permettant à un individu assis sur le siège de recevoir de l'air en provenance de ladite assise, afin d'améliorer son confort dans le véhicule.

Or, intégrer ces deux caractéristiques séparément au sein d'une même assise n'est pas aisée, car cela nécessiterait de la place au niveau de ladite assise et engendrerait des coûts supplémentaires liés à un temps de fabrication important.

Une assise d'un siège de véhicule selon l'invention présente ces deux caractéristiques, à savoir un circuit de ventilation et une nappe de suspension sous la forme d'un film plastique tendu, en s'affranchissant des inconvénients rencontrés sur les assises de siège existantes.

Dans le cadre de la présente invention, une matelassure est un élément comprenant une mousse en polyuréthane

L'invention a pour objet une assise d'un siège de véhicule comprenant une matelassure reposant sur une structure dans laquelle est fixée une nappe de suspension sous la forme d'un film plastique tendu.

Selon l'invention, la matelassure comprend un circuit de ventilation comportant un groupe de ventilation et un conduit de distribution relié audit groupe et en communication avec au moins un canal creusé dans la matelassure et débouchant sur une face supérieure de celle-ci, le conduit de distribution constituant un évidement pratiqué dans une zone inférieure de ladite matelassure qui est en contact avec la structure de sorte que le film ferme le conduit de distribution. Autrement dit, le film tendu de la nappe de suspension a une double fonction :
- celle consistant à assurer de façon autonome une certaine souplesse de l'assise afin qu'un individu qui serait assis sur le siège ait un maximum de confort,
- celle consistant à participer au circuit de ventilation en fermant le conduit de distribution.

L'expression « fermer le conduit de distribution » ne signifie pas « stopper la circulation de l'air dans le conduit de distribution » mais « compléter une paroi délimitant le conduit de distribution afin que ladite paroi ait un contour fermé ». De cette manière, le film de la nappe de suspension contribue à la réalisation du circuit de ventilation du siège en complétant une paroi délimitant le conduit de distribution. Le groupe de ventilation permet de produire de l'air soufflé ou un gaz soufflé, qui va d'abord envahir le conduit de distribution avant que celui-ci ne réoriente ledit gaz ou ledit air vers les canaux de la matelassure d'assise débouchant sur une face supérieure de l'assise. Cette surface supérieure matérialise la surface de l'assise sur laquelle un individu sera assis. Avantageusement, l'assise comprend plusieurs canaux débouchant sur la surface supérieure de l'assise, l'agencement desdits canaux étant prévu pour ventiler de façon homogène les jambes d'un individu qui serait assis sur le siège comprenant ladite assise.

Selon une caractéristique possible de l'invention, la matelassure comprend une face inférieure dans laquelle est creusé le conduit de distribution, la face inférieure comprenant un cordon d'étanchéité saillant de ladite face inférieure et placé autour du conduit de distribution en suivant la forme de celui-ci.

Le cordon d'étanchéité joue le rôle d'un joint permettant au film de la nappe de suspension de fermer le conduit de distribution, de façon étanche afin que de l'air ou du gaz ne s'échappe pas entre la matelassure d'assise et le film de la nappe de suspension. En effet, ce cordon est amené à être écrasé contre le film de la nappe de suspension lorsque la matelassure est appliquée contre la structure d'assise, cette mise en contact étant réalisée moyennant un certain effort.

Selon une caractéristique possible de l'invention, le conduit de distribution s'étend dans un plan, ledit au moins un canal s'étendant dans une direction qui est perpendiculaire audit plan. Lorsque le véhicule dans lequel est monté l'assise repose sur un sol horizontal, le plan du conduit de distribution est horizontal et le canal s'étend selon une direction verticale.

Selon une caractéristique possible de l'invention, l'assise comprend une pièce de diffusion d'air placée dans le conduit de distribution et fixée à la matelassure à l'intérieur de celui-ci, ladite pièce possédant an moins une ouverture destinée à être placée en face dudit au moins un canal. Cette pièce est insérée dans la matelassure et plus exactement dans le conduit de distribution, et sert à distribuer l'air en provenance du groupe de ventilation vers ledit au moins un canal débouchant dans la face supérieure de la matelassure. Ladite pièce comprend une entrée d'air en liaison avec le groupe de ventilation, et autant d'ouvertures qu'il n'y a de canaux dans la matelassure. Cette pièce de diffusion est une pièce relais servant à partitionner l'air ou le gaz en provenance du groupe de ventilation afin de l'acheminer dans chaque canal.

Selon une caractéristique possible de l'invention, la pièce de diffusion a la même forme que celle du conduit de distribution et est fixée à la matelassure à l'intérieur dudit conduit de distribution de façon étanche. Cette fixation peut être effectué par exemple par collage ou par clipsage. Selon une variante de réalisation d'une assise selon l'invention, cette pièce de diffusion est directement surmoulée dans la matelassure de l'assise.

Selon une caractéristique possible de l'invention, la pièce de diffusion possède trois branches rectilignes parallèles et deux branches incurvées reliant lesdites trois branches rectilignes, le groupe de ventilation étant en communication avec l'une des trois branches rectilignes. Autrement dit, la pièce de diffusion comprend une branche rectiligne centrale placée entre deux branches rectilignes latérales, et chaque branche incurvée relie la branche rectiligne centrale à une branche rectiligne latérale. Chaque branche est assimilable à une pièce creuse susceptible de faire transiter de l'air. Avantageusement, le groupe de ventilation envoie de l'air dans la branche rectiligne centrale, qui est ensuite acheminé dans chaque branche incurvée avant d'atteindre les deux branches rectilignes latérales. Le conduit de distribution est une empreinte réalisée dans la matelassure, et la pièce de diffusion est destinée à venir occuper pleinement ladite empreinte. Pour la présente configuration, il est donc supposé que le conduit de distribution possède également trois branches rectilignes parallèles et deux branches incurvées reliant lesdites branches rectilignes.

Selon une caractéristique possible de l'invention, la pièce de diffusion est souple. En effet, il est préférable dans le cadre d'une assise de siège, que la pièce de diffusion ne soit pas trop rigide pour ne pas constituer une bosse susceptible de gêner un individu qui serait assis sur le siège. En étant souple, la pièce de diffusion va se noyer dans la matelassure et ne sera pas détectable par cet individu qui pourra alors pleinement profiter de tout le confort offert par l'assise.

Selon une caractéristique possible de l'invention, la structure comprend une traverse avant et une traverse arrière et le film comprend un premier dispositif d'accroche à la traverse avant et un deuxième dispositif d'accroche à la traverse arrière. Ces deux traverses étant déjà existantes dans la structure d'assise, il suffit alors d'élaborer le premier dispositif et le deuxième dispositif d'accroche appropriés pour pouvoir tendre le film plastique entre lesdites deux traverses.

Selon une caractéristique possible de l'invention, le premier dispositif d'accroche et le deuxième dispositif d'accroche sont en matière plastique. De cette manière, les deux dispositifs d'accroche présentent une bonne tenue mécanique tout en demeurant légers.

L'invention a pour autre objet un procédé d'élaboration d'une assise selon l'invention.

Selon l'invention, le procédé comprend les étapes suivantes :
- Une étape de fixation du film plastique à la structure d'assise pour former la nappe de suspension,
- Une étape de placement de la pièce de diffusion dans la matelassure ,
- Une étape d'insertion du groupe de ventilation dans la matelassure d'assise,
- Une étape d'application de la matelassure comportant la pièce de diffusion et le groupe de ventilation, sur la structure d'assise, de sorte que le film plastique constituant la nappe de suspension ferme le conduit de distribution.

Une assise de siège selon l'invention présente l'avantage de posséder un film plastique sous tension ayant une double fonction, celle de constituer une nappe de suspension et celle de participer au circuit de ventilation de l'assise. Il en résulte que l'assise est simplifiée, plus légère et peu encombrante.

On donne ci-après, une description détaillée d'un mode de réalisation préféré d'une assise selon l'invention en se référant aux figures suivantes :
[Fig. 1] représente une vue en perspective éclatée d'une assise d'un siège selon l'état de la technique,
[Fig. 2] représente une vue en perspective éclatée d'une assise d'un siège selon l'invention,
[Fig. 3] représente une vue du dessous d'une matelassure d'une assise selon l'invention,
[Fig. 4] représente une vue de côté d'une assise selon l'invention.

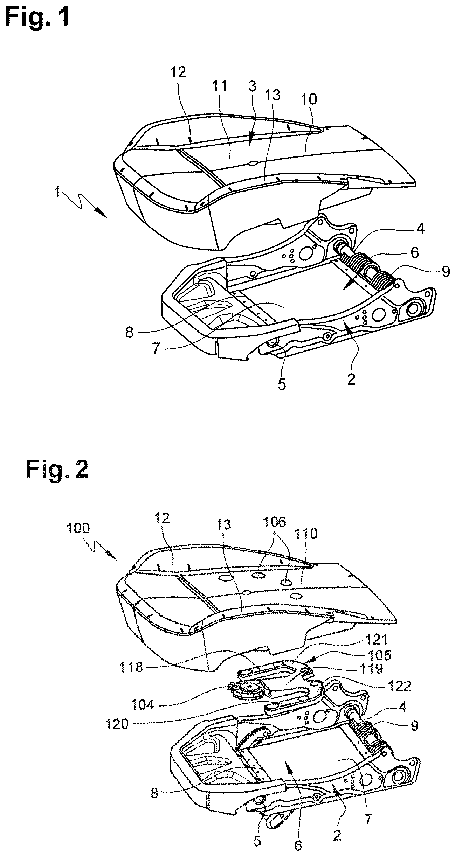

En se référant à la figure 1, une assise 1 de siège selon l'état de la technique, comprend schématiquement une structure 2 solide et résistante, et une matelassure 3 apte à venir s'insérer sur ladite structure 2. Cette structure 2 comprend une traverse arrière 4 et une traverse avant 5 qui sont parallèles et qui s'étendent suivant un axe transversal Y du véhicule. Cette assise 1 possède une nappe de suspension 6 sous la forme d'un film plastique 7 mis sous tension mécanique. Ce film 7 possède un dispositif d'accroche avant 8 apte à venir se fixer à la traverse avant 5 et un dispositif d'accroche arrière 9 apte à venir se fixer à la traverse arrière 4. De cette manière, l'un des deux dispositifs d'accroche 8, 9 est d'abord fixé à la traverse 4, 5 correspondante, puis l'autre dispositif d'accroche 8, 9 est fixé à l'autre traverse 4, 5 en tendant le film plastique 7 entre lesdites deux traversas 4, 5. La matelassure 3 se présente sous la forme d'une pièce monobloc possédant une paroi d'assise 10 supérieure, comprenant une partie centrale 11 plane délimitée par deux bords latéraux 12, 13 relevés par rapport à ladite partie centrale 11.

La matelassure 3 est ainsi enfoncée sur la structure 2 de sorte qu'une face inférieure de ladite matelassure 3 vienne au contact du film plastique 7 tendu constituant la nappe de suspension.

Or, cette assise 2 est dépourvue d'un circuit de ventilation.

En se référant aux figures 2, 3 et 4, une assise 100 de siège selon l'invention se différencie de l'assise 1 de siège ci-avant décrite, en ce qu'elle comprend un circuit de ventilation 101, qui va être élaboré notamment à partir du film plastique 7 tendu.

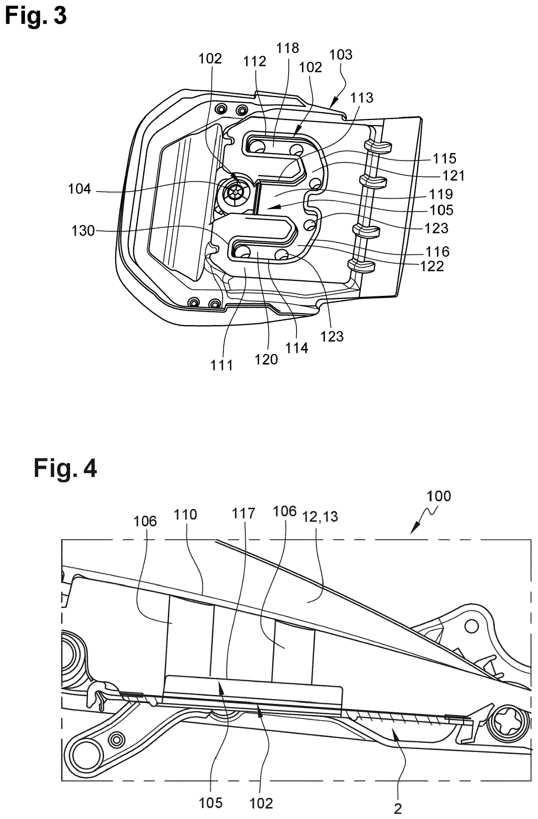

En se référant à la figure 3, le circuit de ventilation 101 comprend un conduit de distribution 102, un groupe de ventilation 104, une pièce de diffusion 105 et des canaux 106, avantageusement de forme cylindrique et débouchant sur la paroi supérieure 110 de la matelassure 103. Le conduit de distribution 102 est un évidement pratiqué dans la paroi inférieure 111 de la matelassure 103. Ce conduit de distribution 102 comprend trois branches 112, 113, 114 rectilignes et parallèles, l'une 113 étant centrale, et les deux autres 112, 114 étant latérales et encadrant ladite branche centrale 113. Ledit conduit 102 comporte également deux branches incurvées 115, 116 reliant chacune la branche centrale rectiligne 113 à une branche latérale 112, 114, de sorte que le conduit de distribution 102 a globalement la forme d'un M.

En se référant à la figure 4, le conduit de distribution 102 présente un plafond 117 dans lequel prennent naissance les canaux 106 débouchant sur la paroi supérieure 110 de la matelassure 103. Les cinq branches 112, 113, 114, 115, 116 sont inscrites dans un même plan, qui est horizontal lorsque le véhicule repose sur un sol horizontal, et les canaux 106 sont parallèles et s'étendent perpendiculairement audit plan et sont donc verticaux lorsque le véhicule repose sur un sol horizontal. Il est à noter que le plafond 117 s'étend dans le même plan que celui des branches 112, 113, 114, 115, 116.

En se référant aux figures 2 et 3, la pièce de diffusion 105 est insérée dans le conduit de distribution 102 de façon à occuper les cinq branches 112, 113, 114, 115, 116 dudit conduit 102. Cette pièce de diffusion 105 a la même forme que celle du conduit de distribution 102 et possède donc trois branches rectilignes 118, 119, 120 et deux branches incurvées 121, 122. Cette pièce de diffusion 105 comporte des ouvertures 123, préférentiellement de forme circulaire, qui sont placées sur ladite pièce 105, de sorte qu'elles se positionnent dans la continuité des canaux 106 débouchant sur la paroi supérieure 110 de la matelassure 103. Le diamètre interne de ces ouvertures 123 est sensiblement égal au diamètre interne des canaux 106. Il est à préciser que la pièce de diffusion 105 occupe la totalité de l'espace délimité par le conduit de distribution 102. La pièce de diffusion 105 possède une certaine souplesse et est préférentiellement surmoulée dans la matelassure 103. Les différentes branches 118, 119, 120, 121, 122 de la pièce de diffusion 105 sont des conduits creux en communication les uns avec les autres.

Comme le montre la figure 3, lorsque la matelassure 103 n'est pas appliquée contre la structure 2 d'assise, le conduit de distribution 102 de ladite matelassure 103 est ouvert, et est alors assimilable à un évidement profilé qui aurait été appliqué dans la face inférieure 111 de la matelassure 103.

En se référant à la figure 4, ce conduit 102 n'est fermé que lorsque la matelassure 103 vient se plaquer contre la structure 2 de l'assise 100 lors de l'élaboration de ladite assise 100. En effet, lorsque la matelassure 103 est appliquée contre la structure 2, la paroi inférieure 111 de la matelassure 103 vient au contact du film plastique 7 tendu constituant la nappe de suspension, et ledit film 7 ferme alors le conduit de distribution 102. Autrement dit, le film plastique tendu 7 constitue une paroi supplémentaire délimitant le conduit de distribution 102. Un cordon 130 saillant de la paroi inférieure 111 de la matelassure 103 et suivant le contour du conduit de distribution 102, vient s'écraser contre le film plastique 7 tendu lorsque la matelassure 103 est appliquée contre la structure 2, afin de jouer le rôle d'un joint d'étanchéité et d'assurer que l'air produit par le groupe de ventilation 104 passe intégralement par les canaux 106 débouchant sur la paroi supérieure 110 de la matelassure 103.

En se référant aux figures 2 et 3, le groupe de ventilation 104 qui est configuré pour produire de l'air soufflé, est placé à une entrée de la branche rectiligne centrale 119 de la pièce de diffusion 105. Lorsque le groupe de ventilation 104 souffle de l'air, celui-ci pénètre d'abord dans la branche rectiligne centrale 119 de la pièce de diffusion 105 avant d'être diffusé dans les autres branches de ladite pièce 105. L'air passe ensuite par les ouvertures 123 de la pièce de diffusion 105 avant d'être acheminé dans les canaux 106. A la sortie de ces canaux 106, l'air sort de la paroi supérieure 110 de la matelassure 103 pour être diffusé sous les jambes d'un individu qui serait assis sur le siège.

Un procédé d'élaboration d'une assise 100 selon l'invention comprend les étapes suivantes :
- Une étape de fixation du film plastique 7 à la structure 2 d'assise, entre les deux traverses 4, 5,
- Une étape de placement de la pièce de diffusion 105 dans la matelassure 103,
- Une étape d'insertion du groupe de ventilation 104 dans la matelassure d'assise 103, de façon à pouvoir souffler de l'air dans la branche rectiligne centrale 119 de la pièce de diffusion 105,
- Une étape d'application de la matelassure 103 comportant la pièce de diffusion 105 et le groupe de ventilation 104, sur la structure 2 d'assise de sorte que le film plastique 7 constituant la nappe de suspension 6 ferme le conduit de distribution 102 du circuit de ventilation 101.

## Revendications

1. Assise (1, 100) d'un siège de véhicule comprenant une matelassure (3, 103) reposant sur une structure (2) dans laquelle est fixée une nappe de suspension (6) sous la forme d'un film (7) plastique tendu, **caractérisée en ce que** la matelassure (103) comprend un circuit de ventilation (101) comportant un groupe de ventilation (104) et un conduit de distribution (102) relié audit groupe (104) et en communication avec au moins un canal (106) creusé dans la matelassure (103) et débouchant sur une face supérieure (110) de celle-ci, et **en ce que** le conduit de distribution (102) constitue un évidement pratiqué dans une zone inférieure (111) de ladite matelassure (103) qui est en contact avec la structure (2) de sorte que le film (7) ferme le conduit de distribution (102).

2. Assise selon la revendication 1, **caractérisée en ce que** la matelassure (103) comprend une face inférieure (111) dans laquelle est creusé le conduit de distribution (102), et **en ce que** la face inférieure (111) comprend un cordon (130) d'étanchéité saillant de ladite face inférieure (111) et placé autour du conduit de distribution (102) en suivant la forme de celui-ci.

3. Assise selon l'une quelconque des revendications 1 ou 2, **caractérisée en ce que** le conduit de distribution (102) s'étend dans un plan, et **en ce que** ledit au moins un canal (106) s'étend dans une direction qui est perpendiculaire audit plan.

4. Assise selon l'une quelconque des revendications 1 à 3, **caractérisée en ce qu'**il comprend une pièce de diffusion (105) d'air placée dans le conduit de distribution (102) et fixée à la matelassure (103) à l'intérieur de celui-ci (102), et **en ce que** ladite pièce (105) possède an moins une ouverture (123) destinée à être placée en face dudit au moins un canal (106).

5. Assise selon la revendication 4, **caractérisée en ce que** la pièce de diffusion (105) a la même forme que celle du conduit de distribution (102) et est fixée à la matelassure (103) à l'intérieur dudit conduit de distribution (102) de façon étanche.

6. Assise selon l'une quelconque des revendications 4 ou 5, **caractérisée en ce que** la pièce de diffusion (105) possède trois branches rectilignes (118, 119, 120) parallèles et deux branches incurvées (121, 122) reliant lesdites trois branches rectilignes (118, 119, 120), et **en ce que** le groupe de ventilation (104) est en liaison avec l'une des trois branches rectilignes (118, 119, 120).

7. Assise selon l'une quelconque des revendications 4 à 6, **caractérisée en ce que** la pièce de diffusion (105) est souple.

8. Assise selon l'une quelconque des revendications 1 à 7, **caractérisée en ce que** la structure (2) comprend une traverse avant (5) et une traverse arrière (4), et **en ce que** film (7) comprend un premier dispositif d'accroche (8) à la traverse avant (5) et un deuxième dispositif d'accroche (9) à la traverse arrière (4).

9. Assise selon la revendication 8, **caractérisée en ce que** le premier dispositif d'accroche (8) et le deuxième dispositif d'accroche (9) sont en matière plastique.

10. Procédé d'élaboration d'une assise selon l'une quelconque des revendications 1 à 9, **caractérisé en ce qu'**il comprend les étapes suivantes :
- Une étape de fixation du film plastique (7) à la structure (2) d'assise pour former la nappe de suspension (6),
- Une étape de placement de la pièce de diffusion (105) dans la matelassure (103),
- Une étape d'insertion du groupe de ventilation (104) dans la matelassure d'assise (103),
- Une étape d'application de la matelassure (103) comportant la pièce de diffusion (105) et le groupe de ventilation (104), sur la structure (2) d'assise, de sorte que le film plastique (7) constituant la nappe de suspension (6) ferme le conduit de distribution (102).

## Patentansprüche

1. Sitzfläche (1, 100) eines Fahrzeugsitzes, umfassend ein Polster (3, 103), das auf einer Struktur (2) aufliegt, in der eine Aufhängungsbahn (6) in Form einer gespannten Kunststofffolie (7) befestigt ist, **dadurch gekennzeichnet, dass** das Polster (103) einen Belüftungskreislauf (101) umfasst, der eine Belüftungsgruppe (104) und eine Verteilungsleitung (102) aufweist, die mit der Gruppe (104) verbunden ist und mit mindestens einem Kanal (106) in Verbindung steht, der im Polster (103) vorgesehen und auf einer Oberseite (110) desselben mündet, und dass die Verteilungsleitung (102) eine Aussparung bildet, die in einem unteren Bereich (111) des Polsters (103) ausgebildet ist, der mit der Struktur (2) in Kontakt steht, so dass die Folie (7) die Verteilungsleitung (102) schließt.

2. Sitzfläche nach Anspruch 1, **dadurch gekennzeichnet, dass** das Polster (103) eine Unterseite (111) umfasst, in der die Verteilungsleitung (102) vorgesehen ist, und dass die Unterseite (111) eine Dichtschnur (130) umfasst, die von der Unterseite (111) vorsteht und um die Verteilungsleitung (102) herum angeordnet ist, wobei sie deren Form folgt.

3. Sitzfläche nach einem der Ansprüche 1 oder 2, **dadurch gekennzeichnet, dass** sich die Verteilungsleitung (102) in einer Ebene erstreckt und dass sich der mindestens eine Kanal (106) in einer zur Ebene senkrechten Richtung erstreckt.

4. Sitzfläche nach einem der Ansprüche 1 bis 3, **dadurch gekennzeichnet, dass** sie ein Luftdiffusionsteil (105) umfasst, das in der Verteilungsleitung (102) angeordnet und innerhalb derselben (102) am Polster (103) befestigt ist, und dass das Teil (105) mindestens eine Öffnung (123) besitzt, die dazu bestimmt ist, gegenüber dem mindestens einen Kanal (106) angeordnet zu sein.

5. Sitzfläche nach Anspruch 4, **dadurch gekennzeichnet, dass** das Diffusionsteil (105) dieselbe Form wie die Verteilungsleitung (102) aufweist und auf dichte Weise am Polster (103) innerhalb der Verteilungsleitung (102) befestigt ist.

6. Sitzfläche nach einem der Ansprüche 4 oder 5, **dadurch gekennzeichnet, dass** das Diffusionsteil (105) drei geradlinige parallele Zweige (118, 119, 120) und zwei gekrümmte Zweige (121, 122), die die drei geradlinigen Zweige (118, 119, 120) miteinander verbinden, aufweist und dass die Belüftungsgruppe (104) mit einem der drei geradlinigen Zweige (118, 119, 120) in Verbindung steht.

7. Sitzfläche nach einem der Ansprüche 4 bis 6, **dadurch gekennzeichnet, dass** das Diffusionsteil (105) flexibel ist.

8. Sitzfläche nach einem der Ansprüche 1 bis 7, **dadurch gekennzeichnet, dass** die Struktur (2) eine vordere Querstrebe (5) und eine hintere Querstrebe (4) umfasst und dass die Folie (7) eine erste Vorrichtung (8) zum Einhängen an der vorderen Querstrebe (5) und eine zweite Vorrichtung (9) zum Einhängen an der hinteren Querstrebe (4) umfasst.

9. Sitzfläche nach Anspruch 8, **dadurch gekennzeichnet, dass** die erste Einhängevorrichtung (8) und die zweite Einhängevorrichtung (9) aus Kunststoff gebildet sind.

10. Verfahren zur Fertigung einer Sitzfläche nach einem der Ansprüche 1 bis 9, **dadurch gekennzeichnet, dass** es die folgenden Schritte umfasst:
- einen Schritt des Befestigens der Kunststofffolie (7) an der Sitzstruktur (2), um die Aufhängungsbahn (6) zu bilden,
- einen Schritt des Anordnens des Diffusionsteils (105) im Polster (103),
- einen Schritt des Einsetzens der Belüftungsgruppe (104) in das Sitzpolster (103),
- einen Schritt des Aufbringens des Polsters (103), das das Diffusionsteil (105) und die Belüftungsgruppe (104) umfasst, auf die Sitzstruktur (2), so dass die Kunststofffolie (7), die die Aufhängungsbahn (6) bildet, die Verteilungsleitung (102) schließt.

## Claims

1. Squab (1, 100) of a vehicle seat comprising a padding (3, 103) resting on a structure (2) in which there is fastened a suspension sheet (6) in the form of a stretched plastic film (7), **characterized in that** the padding (103) comprises a ventilation circuit (101) comprising a ventilation unit (104) and a distribution duct (102) connected to said unit (104) and in communication with at least one channel (106) hollowed out in the padding (103) and opening onto an upper face (110) thereof, and **in that** the distribution duct (102) constitutes a recess made in a lower region (111) of said padding (103) that is in contact with the structure (2) such that the film (7) closes the distribution duct (102).

2. Squab according to Claim 1, **characterized in that** the padding (103) comprises a lower face (111) in which the distribution duct (102) is hollowed out, and **in that** the lower face (111) comprises a sealing bead (130) projecting from said lower face (111) and placed around the distribution duct (102) so as to follow the shape thereof.

3. Squab according to either one of Claims 1 and 2, **characterized in that** the distribution duct (102) extends in a plane, and **in that** said at least one channel (106) extends in a direction which is perpendicular to said plane.

4. Squab according to any one of Claims 1 to 3, **characterized in that** it comprises an air-diffusion part (105) placed in the distribution duct (102) and fastened to the padding (103) within said duct (102), and **in that** said part (105) has at least one opening (123) intended to be placed opposite said at least one channel (106).

5. Squab according to Claim 4, **characterized in that** the diffusion part (105) has the same shape as that of the distribution duct (102) and is fastened to the padding (103) within said distribution duct (102) in a sealed manner.

6. Squab according to either one of Claims 4 and 5, **characterized in that** the diffusion part (105) has three parallel rectilinear branches (118, 119, 120) and two curved branches (121, 122) connecting said three rectilinear branches (118, 119, 120), and **in that** the ventilation unit (104) is connected to one of the three rectilinear branches (118, 119, 120) .

7. Squab according to any one of Claims 4 to 6, **characterized in that** the diffusion part (105) is flexible.

8. Squab according to any one of Claims 1 to 7, **characterized in that** the structure (2) comprises a front cross member (5) and a rear cross member (4), and **in that** the film (7) comprises a first fastening device (8) for fastening to the front cross member (5) and a second fastening device (9) for fastening to the rear cross member (4).

9. Squab according to Claim 8, **characterized in that** the first fastening device (8) and the second fastening device (9) are made of plastic.

10. Method for producing a squab according to any one of Claims 1 to 9, **characterized in that** it comprises the following steps:
- a step of fastening the plastic film (7) to the squab structure (2) in order to form the suspension sheet (6),
- a step of placing the diffusion part (105) in the padding (103),
- a step of inserting the ventilation unit (104) into the squab padding (103),
- a step of applying the padding (103), comprising the diffusion part (105) and the ventilation unit (104), to the squab structure (2) such that the plastic film (7) constituting the suspension sheet (6) closes the distribution duct (102).
